# EUROPEAN PATENT APPLICATION

(11) **EP 1 703 729 A2**
(43) Date of publication of application: **20.09.2006**
(21) Application number: 06251367.6
(22) Date of filing: 15.03.2006
(51) Int. Cl.: H04N 5/76, H04N 5/926

(54) **Digital broadcasting recording/reproducing apparatus and method for the same**

(30) Priority: 15.03.2005 JP 2005072875
(71) Applicant: NEC Personal Products, Ltd., Shinagawa-ku Tokyo141-0032 (JP)
(72) Inventor: Hasegawa, Satoshi, Shinagawa-ku Tokyo (JP); Nakaji, Hiroshi, Shinagawa-ku Tokyo (JP)
(74) Representative: Moir, Michael Christopher

(57) **Abstract**

In digital broadcasting, a stream signal includes a data stream in data broadcasting, and a video data stream and an audio data stream in main broadcasting, which streams are combined. A recording/reproducing apparatus includes: a storage unit (14); a read/write section (25) configured to access the storage unit; a separating section (13) configured to separate the data stream from the stream signal in a real-time mode and a record mode, and to output a combined data stream of the video data stream and the audio data stream in the read/ write section (25) in the record mode; and, a processing section (19) configured to receive the data stream from the separating section (13) in the real-time mode and the record mode, and to output data corresponding to the data stream to the read/write section (25) in the record mode. The read/write section records the combined data stream in the storage unit, and records the data in the storage unit independently from the combined data stream.

## Description

### Background of the Invention

### 1. Field of the Invention

The present invention is related to a digital broadcast recording/reproducing apparatus and a method for the same.

### 2. Description of the Related Art

In digital broadcasting, a signal in data broadcasting can be superimposed on a video signal and an audio signal in main broadcasting. The data broadcasting contains data such as EPG (Electronic Program Guides), captions, superimposed characters, in addition to data such as video data of a character string and a figure, and audio data, based upon a BML (Broadcast Markup Language) document, which can be operated in same manner as a Web page on the Internet.

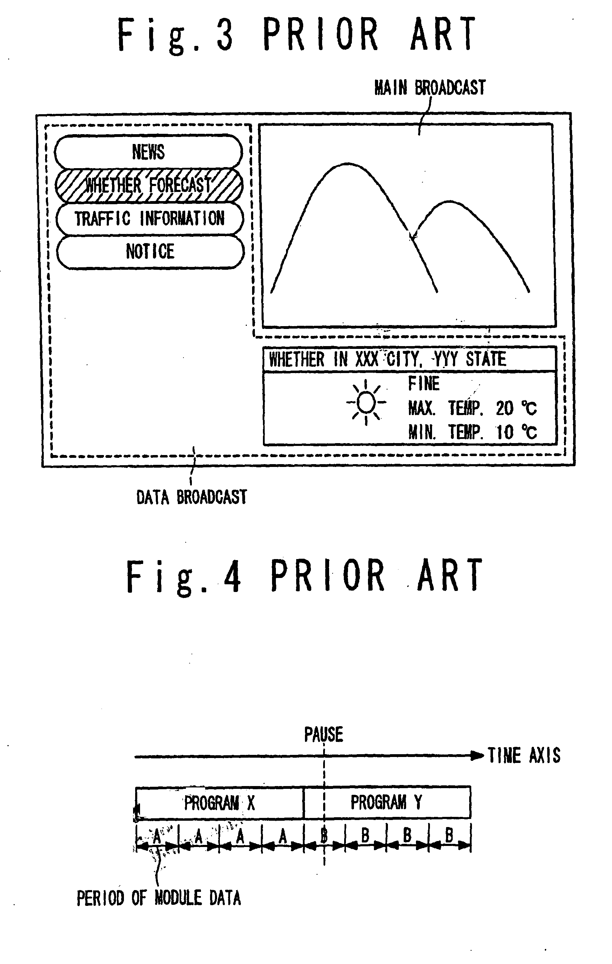

Fig. 3 is a diagram showing an example of a display in the data broadcasting. In this display example, the video signal in the main broadcasting is displayed in a reduced area, and the data in the data broadcasting is displayed within an L-shaped frame around the reduced area. In this display example, when a portion shown as weather forecast is selected, the weather forecast of a relevant region can be displayed. It should be noted that the display of Fig. 3 is merely exemplified. Various sorts of display formats are permitted as data display formats in the data broadcasting. For example, data may be superimposed and displayed on the video signal in the main broadcasting; and only data may be displayed without displaying the video signal in the main broadcasting.

In Japanese television broadcasting, analog television broadcasting is scheduled to be stopped in 2011. For this reason, it is predicted that various countermeasures to digital television broadcasting are rapidly developed and advanced. Under such a situation, a large number of proposals such as those in Japanese Laid-Open Patent Applications JP-P2000-31849A and JP-P2002-344890A have been made about a television receiver which can receive the digital broadcasting signal. As described above, the digital broadcasting is user-friendly, as compared with the current analog television broadcasting. Therefore, new services utilizing the data broadcasting may be expected to be provided.

Conventionally, the standardization of the digital broadcasting has been progressed from the viewpoint of real-time reception of the television broadcasting. Therefore, it has not been discussed in detail how the data broadcasting signal superimposed on the main broadcasting signal should be reproduced when the video and audio signals in the main broadcasting are recorded and reproduced. In particular, an important problem is in that although the BML document data can be operated in the similar manner to operations of the Web page, the data in the data broadcasting cannot be correctly reproduced, when special reproducing operations such as a pause operation, a fast-forward reproducing operation, and a backward reproducing operation are carried out during reproduction of the video and audio signals in the main broadcasting. Thus, the reproducing operation of the data in the data broadcasting must be completely stopped.

Generally, a carousel system is employed in which same data is repeatedly broadcast in the data broadcasting. The data signal broadcast in the carousel system is transmitted as module data compressed in a ZIP format, or the like.

In an example of the digital broadcasting shown in Fig. 4, module data A is repeatedly transmitted in the data broadcasting while a program X is transmitted in the main broadcasting. Also, a module data B is repeatedly transmitted in the data broadcasting while a program Y is transmitted in the main broadcasting. Specifically, each of the module data A and B is composed of a plurality of data packets, and these data packets are repeatedly transmitted. The data of these data packets are expanded, so that file data is obtained. Therefore, in order to obtain the file data, each of these data packets must be received at least once. Thus, it is necessary to continuously receive the module data for a predetermined time or a longer time.

Now, the operations will be described when the pause operation and the fast-forward reproducing operation are carried out while the video and audio signals in the main broadcasting, and the data signal in the data broadcasting are reproduced.

### 1. Pause Operation:

When the video and audio signals in the main broadcasting and the data signal in the data broadcasting are recorded, a digital broadcasting signal is converted into a format of MPEG2-TS (Moving Picture Experts Group 2-Transport Stream), and is filtered. Thus, the data stream in the data broadcasting is superimposed on a video data stream and an audio data stream in the main broadcasting, and the superimposed data stream is recorded on an HDD (Hard Disk Drive). Also, when the recorded superimposed data stream is reproduced, the superimposed data stream is read out from the HDD, and then a decoding (expanding) process is carried out on the superimposed data stream to reproduce the video data stream and the audio data stream in the main broadcasting, and the data steam in the data broadcasting.

The module data cannot be correctly reproduced when the module data can not be completely read out from the HDD, as in a case where the pause operation is carried out immediately after a reproducing operation of the main broadcasting signal is started or a program of the main broadcasting to be reproduced is changed. In the example of the digital broadcasting shown in Fig. 4, the pause operation is carried out just after the program X of the main broadcasting to be reproduced is switched to the program Y. In this case, the module data A of the data broadcasting is also switched to the module data B. As a consequence, the reading operation of the module data A from the HDD is stopped and the module data A is discarded from a memory, and the module data B is being read out from the HDD. At this time, since the reproducing operation of the program X of the main broadcasting is under a pause state, the reading operation of the module data B is not completed until the reproducing operation of this program Y is started. As a result, the reproducing operation of the data in the data broadcasting must be stopped.

### 2. Fast-Forward Reproducing Operation:

The reason why the data signal in the data broadcasting cannot be reproduced when a fast-forward reproducing operation is carried out is in that a decoding process is not completely carried out. That is, usually in a television receiver, when the video and audio signals of the main broadcasting are recorded, the video and audio signals of the main broadcasting are compressed in a predetermined unit (for example, unit of 15 frames, 0.5 seconds), and then, one frame of the predetermined unit is recorded as an I frame. When the fast-forward reproducing operation is performed, the reproducing operation is carried out in an interlacing manner by reading only the I frames of compressed data.

As described above, in order to reproduce the data signal in the data broadcasting, it is necessary to continuously read out the module data from the HDD for a predetermined time, and to completely decode the read-out module data. From a difference in the above-described reproducing system between the main broadcasting and the data broadcasting, it is practically difficult to correctly reproduce the module data in the data broadcasting when the fast-forward reproducing operation is carried out. In this case, it could be considered to provide a decoder for the television receiver, so as to permit the decoder to completely decode the data at the same speed as the reproducing rate of the video and audio data when the fast-forward reproducing operation is carried out. However, this decoder provides an excess function to the television receiver, resulting in increase of the manufacturing cost.

### Summary of the Invention

An object of the preferred embodiments of the present invention is to provide an apparatus and method for recording/reproducing a digital broadcasting signal, in which data of data broadcasting can be correctly reproduced.

In an aspect of the present invention, a recording/reproducing apparatus for a stream signal in digital broadcasting is provided. Here, the stream signal includes a data stream in data broadcasting, and a video data stream and an audio data stream in main broadcasting, which streams are combined. The recording/reproducing apparatus includes a storage unit; a read/write section configured to access the storage unit; a separating section configured to separate the data stream from the stream signal in a real time mode and a record mode, and to output a combined data stream of the video data stream and the audio data stream to the read/write section in the record mode; and a processing section configured to receive the data stream from the separating section in the real time mode and the record mode and to output a data corresponding to the data stream to the read/write section in the record mode. The read/write section records the combined data stream in the storage unit and the data in the storage unit independently from the combined data stream.

The data may be one of a module data extracted from the data stream and a file data obtained from the module data.

Also, the processing section may include a data acquiring section configured to receive the data stream from the separating section in the real time mode and the record mode and to extract the module data from the data stream; and a file processing section configured to generate the file data from the module data. The data acquiring section may output one of the module data and the file data as the data to the read/write section in the record mode.

Also, the processing section may generate a data management table which contains an identifier to identify the data, and start and end times of the record of the data, and output the data management table to the read/write section, which records the data management table in the storage unit.

Also, when an event has occurred in the data, the processing section may generate an event management table which contains a sort of the event, an occurrence time of the event, the identifier of the data and an additional data to the data, and outputs the event management table to the read/write section, which records the event management table in the storage unit.

Also, the read/write section may read out the combined data stream and the data from the storage unit in a reproduction mode. The separating section may separate the combined data stream received in the real time mode or read out from the storage unit in the reproduction mode into the video data steam and the audio data stream. The processing section may generate a video data component and an audio data component from the data received from the separating section in the real time mode and read out from the storage unit by the read/write section in the reproduction mode. The recording/reproducing apparatus may further include a video decoder section configured to decode the video data stream from the separating section in the real time mode and the reproduction mode to generate a decoded video data stream; an audio decoder section configured to decode the audio data stream from the separating section in the real time mode and the reproduction mode to generate a decoded audio data stream; a video synthesizing section configured to synthesize the decoded video data stream and the video data component from the processing section and to output a synthetic video data to an external display unit; and an audio synthesizing section configured to synthesize the decoded audio data stream and the audio data component from the processing section and to output a synthetic audio data to an external audio output unit.

Also, the data may be one of a module data extracted from the data stream and a file data obtained from the module data. The processing section may include a data acquiring section configured to receive the data stream from the separating section in the real time mode and the record mode and from the read/write section in the reproduction mode and to generate the module data from the data stream; and a file processing section configured to generate the file data from the module data and to generates the video data component and the audio data component from the file data in the real time mode and the reproduction mode.

Also, the processing section may generate a data management table which contains an identifier to identify the data, and start and end times of the record of the data, and output the data management table to the read/write section, which records the data management table in the storage unit. The read/write section may read out the combined data stream, the data and the data management table from the storage unit. The processing section may reproduce the data in synchronization with the video data stream and the audio data stream based on the data management table.

Also, when an event has occurred in the data, the processing section may generate an event management table which contains a sort of the event, an occurrence time of the event, the identifier of the data and an additional data to the data, and output the event management table to the read/write section, which records the event management table in the storage unit. The read/write section may read out the combined data stream, the data, the data management table and the event management table from the storage unit. The processing section reproduces the data in synchronization with the video data stream and the audio data stream based on the data management table and the event management table.

In another aspect of the present invention, in a method of recording/reproducing a stream signal in digital broadcasting, the stream signal comprises a data stream in data broadcasting, and a video data stream and an audio data stream in main broadcasting, which streams are combined. The method is achieved by receiving the stream signal in a real time mode and a record mode; by separating the stream signal into the data stream and a combined data stream of the video data stream and the audio data stream in the real time mode and the record mode; by recording the combined data stream in a storage unit in the record mode; by generating a data corresponding to the data stream in the real time mode and the record mode; by recording the data in the storage unit independently from the combined data stream; by separating the combined data stream into the vide data stream and the audio data stream in the real time mode; by decoding the vide data stream and the audio data stream to generate a decoded vide data stream and a decoded audio data stream, respectively in the real time mode; by generating a video data component and an audio data component from the data in the real time mode; and by synthesizing the decoded vide data stream and the decoded audio data stream with the video data component and the audio data component to generate a synthetic video data to an external display unit and a synthetic audio data to an external audio output unit, respectively, in the real time mode.

Here, the method may be achieved by further generating a data management table which contains an identifier to identify the data, and start and end times of the record of the data; and recording the data management table in the storage unit.

Also, the method may be achieved by further generating, when an event has occurred in the data, an event management table which contains a sort of the event, an occurrence time of the event, the identifier of the data and an additional data to the data; and recording the event management table in the storage unit.

Also, the method may be achieved by further reading out the combined data stream and the data from the storage unit in a reproduction mode; separating the combined data stream into the video data steam and the audio data stream in the reproduction mode; generating the video data component and the audio data component from the read-out data in the reproduction mode; decoding the vide data stream and the audio data stream to generate a decoded vide data stream and a decoded audio data stream, respectively in the reproduction mode; generating a video data component and an audio data component from the data in the reproduction mode; and synthesizing the decoded vide data stream and the decoded audio data stream with the video data component and the audio data component to generate a synthetic video data to an external display unit and a synthetic audio data to an external audio output unit, respectively, in the reproduction mode.

Also, the method may be achieved by further reading out the data management table from the storage unit in the reproduction mode; and reproducing the data in synchronization with the video data stream and the audio data stream based on the data management table.

Also, the method may be achieved by further reading out the event management table from the storage unit in the reproduction mode; and reproducing the data in synchronization with the video data stream and the audio data stream based on the data management table and the event management table.

Also, the generating a data corresponding to the data stream may be achieved by generating as the data, a module data from the data stream.

Also, the generating a data corresponding to the data stream may be achieved by generating a module data from the data stream; and generating as the data, a file data from the module data.

### Brief Description of the Drawings

Preferred features of the present invention will now be described, by way of example only, with reference to the accompanying drawings, in which:-
Fig. 1 is a block diagram showing a configuration of a recording/reproducing apparatus for a digital broadcasting signal according to an embodiment of the present invention;
Fig. 2 is a diagram showing an example of digital broadcasting and relation of data packets and file data in data broadcasting;
Fig. 3 is a diagram showing a conventional example of a display format in the data broadcasting; and,
Fig. 4 is a diagram showing a conventional example of reception of main broadcasting and data broadcasting in the digital broadcasting.

### Description of the Preferred Embodiments

Hereinafter, a digital broadcasting recording/reproducing apparatus and method for a same of the present invention will be described in detail with reference to the attached drawings.

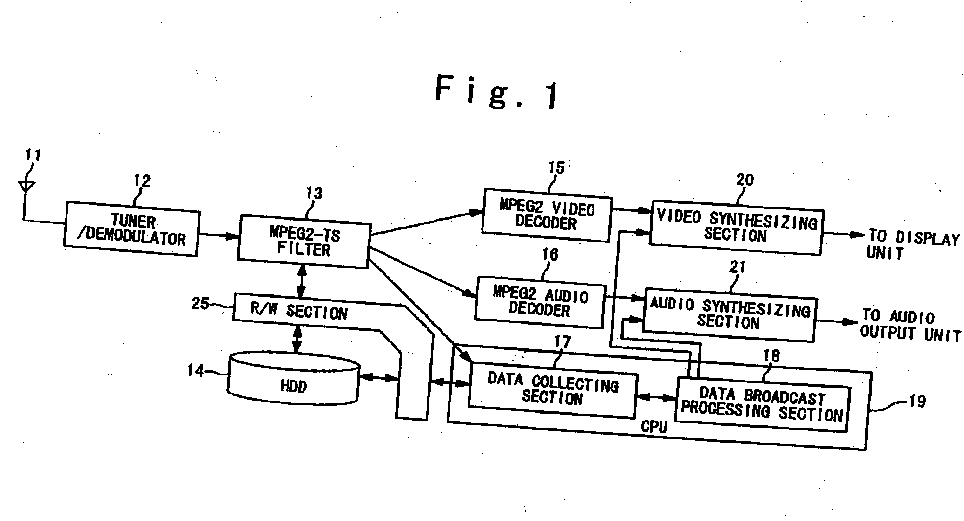

Fig. 1 is a block diagram showing a configuration of the digital broadcasting recording/reproducing apparatus according to an embodiment of the present invention. Referring to Fig. 1, the recording/reproducing apparatus is provided with an antenna 11, a tuner/demodulating circuit 12, an MPEG2-TS filter 13, an HDD (Hard Disk Drive) 14, an MPEG2 video decoder 15, an MPEG2 audio decoder 16, a CPU (Central Processing Unit) 19, a video synthesizing section 20, an audio synthesizing section 21, and a read/write section 25. The CPU 19 contains a data acquiring section 17 and a data broadcasting processing section 18.

The antenna 11 receives signals of digital broadcasting. The tuner/demodulating circuit 12 is tuned up to a desirable signal from the digital broadcasting signals received by the antenna 11, and demodulates the tuned signal to produce MPEG2-TS data packets. The tuner/demodulating circuit 12 also carries out an error correction process. A data packet identification code factor called as a PID (Packet-Identifier) has been added to each of the MPEG2-TS data packets.

In a real time mode, the MPEG2-TS filter 13 separates the MPEGT2-TS data packet stream selected by the tuner/demodulating circuit 12 into a combined data stream of a video data stream and an audio data stream in the main broadcasting and a carousel type data steam in the data broadcasting based upon the PIDs, and then separates the combined data stream into the video data stream and the audio data stream. The filter 13 outputs the video data stream, the audio data stream, and the data stream to the MPEG2 video decoder 15, the MPEG2 audio decoder 16, and the data acquiring section 17, respectively. In a record mode, the MPEG2-TS filter 13 outputs the combined data stream to the read/write section 25 and the data stream to the data acquiring section 17. In a reproduction mode, the MPEG2-TS filter 13 receives the combined data stream from the read/write section 25, separates the combined data stream into the video data stream and the audio data stream, and outputs them to the MPEG2 video decoder 15 and the MPEG2 audio decoder 16, respectively.

The data acquiring section 17 acquires the carousel data stream in the data broadcasting sent from the MPEG2-TS filter 13, and produces a module data by compressing the data stream in a ZIP format or the like. In the real time mode, the data acquiring section 17 sends the module data to the data broadcasting processing section 18. In reproduction mode, the data acquiring section 17 receives the module data from the read/write section 25 and sends the module data to the data broadcasting processing section 18. In the record mode, the data acquiring section 17 sends the module data to the read/write section 25. Also, the data acquiring section 17 generates a data management table and an event management table (both not shown in Fig. 1) and sends them to the read/write section 25, which records these tables on the HDD 14. The data management table describes a display start time and display end time of the video and audio data streams recorded on the HDD 14. The event management table describes a sort and an occurrence time of each of events which have occurred in the data broadcasting corresponding to the video and audio data streams recorded on the HDD 14. It should be noted that details of the data management table and event management table will be described later. When there is no event, no event data is described in the event management table.

The read/write section 25 records the combined data stream of the video data stream and the audio data stream sent from the MPEG2-TS filter 13 on the HDD 14. In addition, the read/write section 25 records the module data on the HDD 14 independent from the video data stream and the audio data stream together with the data management table and the event management table. Also, the read/write section 25 reads the combined data stream of the video data stream and the audio data stream from the HDD 14 to send to the MPEG2-TS filter 13. In addition, the read/write section 25 reads the module data, the data management table and the event management table from the HDD 14 to send to the data acquiring section 17.

The MPEG2 video decoder 15 decodes the video data stream of the main broadcasting sent from the MPEG2-TS filter 13. The MPEG2 audio decoder 16 decodes the audio data stream of the main broadcasting sent from the MPEG2-TS filter 13.

The data broadcasting processing section 18 reproduces the events, which have occurred in the data broadcasting, based on the sort and occurrence time in the event management table such that the events are synchronous with the reproduction of the video data stream and the audio data stream in the main broadcasting based on a display start time and display end time in the data management table. Thus, the data broadcasting processing section 18 reproduces the file data based on the reproduced events and decodes the file data to generate a video data component and an audio data component. It should be noted that when no event has occurred, the event is not reproduced when the data broadcast is reproduced. The data broadcasting processing section 18 sends an image data component of the file data to the video synthesizing section 20 and an audio data component to the audio synthesizing section 21.

The video synthesizing section 20 synthesizes the video data stream in the main broadcasting from the MPEG2 video decoder 15 and the video data component from the data broadcasting processing section 18, and outputs the synthesized video data stream to an external display unit such as a television receiver (not shown).

The audio synthesizing section 21 synthesizes the audio data stream in the main broadcasting decoded by the MPEG2 audio decoder 16 and the audio data component from the data broadcasting processing section 18, and outputs the synthesized audio data stream to an external acoustic output unit such as a speaker.

It should be noted that Fig. 1 merely shows only the essential components in order to carry out the present invention. In an actual case, general-purpose components such as a modem used in bidirectional services of the data broadcasting, a remote controller Interface as an interface with a remote controller are employed for constructing the digital broadcasting recording/reproducing apparatus.

Also, when receiving the data stream from the MPEG2-TS filter 13, the data acquiring section 17 sends the module data corresponding to the data stream to the read/write section 25. However, the data acquiring section 17 may send the module data to the data broadcasting processing section 18 for obtaining a file data for the module data prior to the record of the module data. Then, the data acquiring section 17 may send the file data to the read/write section 25.

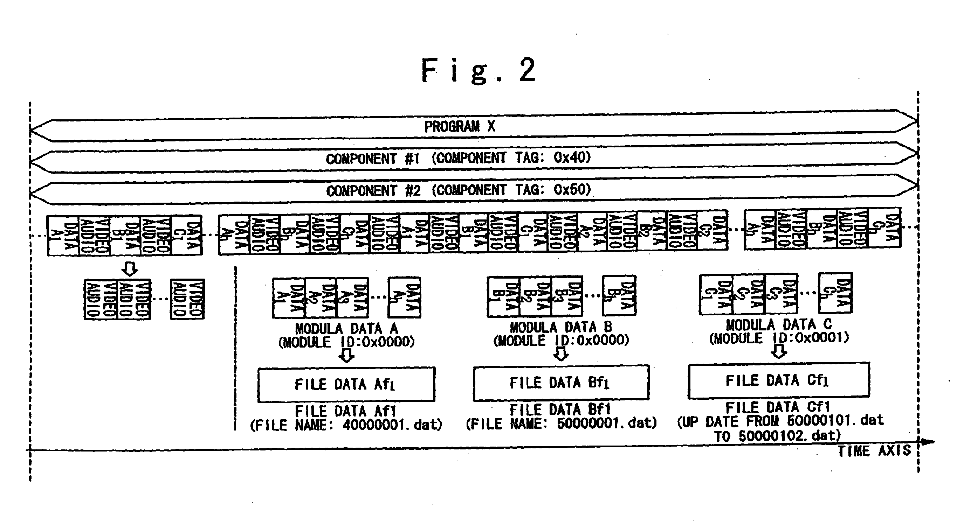

Next, an operation of the digital broadcasting reproducing/recording apparatus according to the present embodiment will be described below with reference to Fig. 2. In this embodiment, as shown in Fig. 2, a case of digital broadcasting for transmitting a program X in the main broadcasting will be described. In an example shown in Fig. 2, two components of the data broadcasting, namely, a component #1 (component tag [0x40]) and another component #2 (component tag [0x50]) are simultaneously transmitted as components independent from the program X in the main broadcasting. It should be noted that two or more components of the data broadcasting may be transmitted at the same time, and only one component of the data broadcasting may be transmitted.

In the component #1, data packets for a module data A (component tag [0x40], module ID [0x0000]) are inserted between the video and audio data packets in the streams of the program X of the main broadcasting, and the resultant data are transmitted. The data acquiring section 17 combines the data packets to each other to produce the module data A. The data broadcasting processing section 18 decodes or expands the module data to produce a file data Af1 (file name [40000001.dat]). From the display start time of the program X to the display end time thereof, the data packets of the module data A are inserted between the video and audio data packets of the main broadcasting, and the resultant data are repeatedly transmitted. As a consequence, in order to receive the module data A completely, it is sufficient to continue the reproducing operation for a predetermined time, even if the reproducing operation is started from any time.

On the other hand, in the component #2, data packets Bₙ and Cₙ for a module data B (component tag [0x50], module ID [0x0000]) and a module data C (component tag [0x50] module ID [0x0001]) are inserted between the video and audio data packets in the streams of the program X of the main broadcasting, and the resultant data are transmitted. The data acquiring section 17 combines the data packets Bₙ to each other to produce the module data B and the data packets Cₙ to each other to produce the module data C. The data broadcasting processing section 18 decodes or expands the module data B and C to produce a file data Bf1 (file name [50000001.dat]) and a file data Cf1. This file data Cf1 is updated in a half way (namely, the file name is updated from a file name [50000101.dat] to a file name [50000102.dat]). From the display start time of the program X to the display end time thereof, the data packets of the module data B and the data packets of the module data C are inserted between the video and audio data packets of the main broadcasting, and the resultant data are repeatedly transmitted. As a consequence, in order to receive the module data B and the module data C completely, it is sufficient to continue the reproducing operation for a predetermined time, even if the reproducing operation is started from any time.

As described above, one or more module data are contained in a component of the data broadcasting, and the one or more module data are transmitted in parallel. Also, the one or more file data are contained in one module data.

Also, not only the module data but also data of events which have occurred in the data broadcasting are contained in the component of the data broadcasting. A plurality of sorts of events which possibly occur in the data broadcasting are present, as listed in the following table 1.

**TABLE 1**

| sort of event | contents |
|---|---|
| Data Event Changed | Event where module data of data broadcasting are switched |
| Module Update | Event where file data of module data is updated |
| NPT (normal Play Time) Referred | Event which is given to BML document at time ignition (image and character string are displayed at predetermined time in BML document etc.) |
| Event Message | Event where character string is given to BML document (message is displayed in BML document etc.) |
| Restore Flag | Event which is forcibly restored to start-up document (top page of data broadcasting) |

Next, an operation of the digital broadcasting recording/reproducing apparatus according to this embodiment of the present invention will now be described about a case of a real-time viewing operation; a case of a recording operation; and a case of a reproducing operation.

### [REAL-TIME VIEWING OPERATION]

In the digital broadcasting recording/ reproducing apparatus of this embodiment, an operation when the real-time viewing operation is carried out is similar to that of the conventional television receiver. That is, in the digital broadcasting recording/reproducing apparatus shown in Fig. 1, the tuner/demodulating circuit 12 tunes a desirable signal from the digital broadcasting signals received by the antenna 11, and demodulates the tuned desirable signal, so that a stream of an MPEG2-TS data packets is produced. The MPEG2-TS filter 13 separates the produced stream of the MPEG2-TS data packets into various sorts of broadcasting data packets. That is, the video data stream of the main broadcasting is supplied to the MPEG2 video decoder 15, the audio data stream of the main broadcasting is supplied to the MPEG2 audio decoder 16, and the data stream of the carousel system of the data broadcasting is supplied to the data acquiring section 17. The module data is produced from the data stream in the data broadcasting acquired by the data acquiring section 17 and the data broadcasting processing section 18 decodes the module data to generate the file data of a video data component and an audio data component. The video data component and the audio data component are outputted to the video synthesizing section 20 and the audio synthesizing section 21, respectively. After the video data stream of the main broadcasting is decoded by the MPEG2 video decoder 15, the decoded video data stream is synthesized with the video data component by the video synthesizing section 20, and the synthesized video data is outputted to the external display unit. On the other hand, after the audio data stream of the main broadcasting is decoded by the MPEG2 audio decoder 16, the decoded audio data stream is synthesized with the audio data component by the audio synthesizing section 21, and the synthesized audio data is outputted to the external acoustic output unit.

### [RECORDING OPERATION]

In the digital broadcasting recording/ reproducing apparatus in the above-described embodiment, an operation when the recording operation is carried out is different from that of the conventional television receiver. In the conventional television receiver, the data stream in the data broadcasting is superimposed on the combined data stream of the video data stream and the audio data stream of the main broadcasting, and the superimposed data is recorded on the HDD.

In contrast to the above conventional recording operation, in the digital broadcasting recording/reproducing apparatus of the present embodiment, the combined data stream of the video data stream and the audio data stream of the main broadcasting is recorded on the HDD 14 independently from the data stream in the data broadcasting. Also, the data stream in the data broadcasting is recorded on the HDD 14 as follows. That is, the data acquiring section 17 compresses the data stream in the data broadcasting in the ZIP format or the like, and the compressed data is recorded on the HDD 14 as the module data. Alternatively, this module data may be decoded by the data broadcasting processing section 18, and the decoded module data is recorded on the HDD 14 as the file data independent from the combined data stream of the video data stream and the audio data stream of the main broadcasting.

It should be noted that since the module data having the same contents are repeatedly transmitted in the carousel transmission system, the module data which have been already recorded on the HDD 14 are not recorded on the HDD 14 again.

Also, at the same time as the recording operation of the carousel data stream on the HDD 14, the data acquiring section 17 generates the data management table on the data recorded on the HDD 14, in order to establish synchronization of the data stream in the data broadcasting with the video data stream and the audio data stream of the main broadcasting on the time axis during the reproducing operation. Then, the data acquiring section 17 records the data management table on the HDD 14 as a separate file. The following data are described in the data management table for the file data corresponding to the module data:
Component tag: a tag used to identify a component of the data broadcasting for transmitting the file data;
·Module ID: an ID used to identify the module data corresponding to the file data;
Display start time: a time when a display of the file data is started (relative time when a display start time of a program of the main broadcasting is assumed as 0 minute 0 second);
Display end time: a time when a display of the relevant file data is completed (relative time when a record start time of component of main broadcasting is assumed as 0 minute 0 second); and
File name: a name used to identify the file data.

Specifically, when the digital broadcasting shown in Fig. 2 is recorded, data represented in the following table 2 is described in the data management table:

**TABLE 2**

| component tag | module ID | display start time | display end time | file name |
|---|---|---|---|---|
| 0x40 | 0x0000 | 0m0s | 15m37s | 40000001.dat |
| 0x50 | 0x0000 | 0m0s | 15m37s | 50000001.dat |
| 0x50 | 0x0001 | 0m0s | 5m22s | 50000101.dat |
| 0x50 | 0x0001 | 5m22s | 15m37s | 50000102.dat |

In this table 2, symbol m indicates a minute, and symbol s shows a second.

As indicated in the table 2, for the component #1 of the data broadcasting (component tag [0x40]) is recorded, one module data A (component tag [0x40], module ID [0x0000]) is recorded. The file data Af1 for the module data A is not changed from the display start time of the program X of the main broadcasting to the display end time (file name [40000001.dat]). Also, for the component #2 of the data broadcasting (component tag [0x50]) is recorded, two module data are recorded, namely, the module data B (component tag [0x50], module ID [0x0000]), and the module data C (component tag [0x50], module ID[0x0001]) are recorded. The file data Bf1 for the module data B is not changed from the recording start time of the program X of the main broadcasting to the recording end time thereof (file name [50000001.dat]). on the other hand, when the file data Cf1 for the module data C is recorded, the module data C is updated after 5 minutes 22 seconds from the display start time of the program X of the main broadcasting (file name is updated from file name [50000101.dat] to file name [50000102.dat]).

The data acquiring section 17 further generates an event management table 14 on events (interrupt process to a data broadcasting control) which have occurred in the data broadcasting of the module data, and the event management table 14 is recorded on the HDD 14 as a separate file. The following data are described in this event management table:
·Event sort: a sort of an event;
·Component tag: a tag used to identify a component of data broadcasting in which a module data is being transmitted when the event has occurred;
·Module ID: an ID used to identify the module data which was transmitted when the event has occurred;
·Occurrence time: a time when the event has occurred (relative time when the display start time of the component of the main broadcasting is assumed as 0 minute 0 second); and
·Additional data: an additional data related to the event.
Specifically, when the digital broadcasting data shown in Fig. 2 are recorded, data is described in the event management table as represented in the following table 3:

**TABLE 3**

| event sort | Component tag | module ID | Occurrence time | additional data |
|---|---|---|---|---|
| Module Update | 0x50 | 0x0001 | 5m22s | none |
| Event Message | 0x40 | 0x0000 | 12m56s | jugemu |

In this table 3, symbol m indicates a minute, and symbol s denotes a second.

As shown in the table 3, after 5 minutes 22 seconds from the display start time of the program X of the main broadcasting, an event of [Module Update] occurs in the component #2 (component tag [0x50]) of the data broadcasting, to update the file data Cf1 of the module data C (module ID [0x0001]) (from file name [50000101.dat] to file name [50000102.dat]).

Also, after 12 minutes 56 seconds from the display start time of the program X of the main broadcasting, an event of [Event Message] occurs in the component #1 (component tag [0x40]) of the data broadcasting, so as for a character string of [jugemu] to be transferred to a script contained in the BML document and to be processed.

### [REPRODUCING OPERATION]

In the digital broadcasting recording/ reproducing apparatus of the above embodiment, an operation when the reproducing operation is carried out is different from that of the conventional television receiver. In the conventional television receiver, the data stream in the data broadcasting is superimposed on the combined data stream of the video data stream and the audio data stream of the main broadcasting, and the resultant stream is recorded on the HDD. Therefore, after the reproducing operation is carried out, after the read operation of the superimposed data from the HDD has been completed, the read data stream is separated into the video data stream, the audio data stream, and the carousel data stream. Thereafter, the decoding processes are carried out to the separated data streams.

In contrast to the above-described conventional reproducing operation, in the digital broadcasting recording/reproducing apparatus of this embodiment, the data stream in the data broadcasting has been recorded on the HDD 14 as the module data or the file data, independent from the video data stream and the audio data stream. As a result, the data acquiring section 17 can directly acquire the data stream from the HDD 14 without passing through the MPEG2-TS filter 13. It should be noted that the video data stream and the audio data stream of the main broadcasting are read out from the HDD 14 by the MPEG2-TS filter 13. Then, the video data stream and the audio data stream are decoded by the MPEG2 video decoder 15 and the MPEG2 audio decoder 16, respectively.

Also, the data acquiring section 17 acquires the data management table and the event management table from the HDD 14. When the file data is to be reproduced and decoded in no event, the data broadcasting processing section 18 reproduces the file data based on the data management table such that the file data is synchronous with the reproduction of the video data stream and the audio data stream in the main broadcasting based on the display start time and the display end time in the data management table. Then, the data broadcasting processing section 18 decodes the file data to produce the video data component and the audio data component. For instance, the data broadcasting processing section 18 decodes the file data Af1 (file name [40000101.dat]) or the file data Bf1 (file name [50000101.dat]).

Similarly, when the file data is changed due to the events, the data broadcasting processing section 18 reproduces the events from the sort and occurrence time of the events in the event management table such that the events are synchronous with the reproduction of the video data stream and the audio data stream in the main broadcasting based on the display start time and the display end time in the data management table. Then, the data broadcasting processing section 18 reproduces the file data based on the reproduced events and decodes the file data to produce the video data component and the audio data component. For instance, the data broadcasting processing section 18 decodes the file data Cf1 (file name [50000101.dat]) before the update until 5 minutes 22 seconds elapse from the display start time of the program X of the main broadcasting. After 5 minutes 22 seconds has elapsed, the data broadcasting processing section 18 decodes the file data Cf1 (file name [50000102.dat]) after the update.

As described above, in the digital broadcasting recording/reproducing apparatus of the present embodiment, the data acquiring section 17 records the module data or file data in the data broadcasting on the HDD 14 independent from the video data stream and the audio data stream in the main broadcasting. In addition, the data acquiring section 17 generates and records the data management table containing the display start time and display end time of this data in the data broadcasting recorded on the HDD 14. Then, the data broadcasting processing section 18 reproduces the data in the data broadcasting recorded on the HDD 14 in synchronism with the reproduction of the video data stream and the audio data stream in the main broadcasting based upon the data management table and the event management table. In this way, the data in the data broadcasting is recorded independent from the video data stream and the audio data stream in the main broadcasting. Also, the display start time and the display end time of the above data are recorded. Therefore, even when the reproducing operation of the video data stream and the audio data stream in the main broadcasting is temporarily stopped due to the pause operation, the data in the data broadcasting at a time when the reproducing operation was temporarily stopped can be read out independent from the video data stream and the audio data stream. As a result, the data in the data broadcasting can be correctly reproduced. Also, even when representative frames of the video data stream and the audio data stream in the main broadcasting are reproduced intermittently due to the fast-forward reproducing operation, the data in the data broadcasting at a time when the representative frames are transmitted can be read independent from the video data stream and the audio data stream. As a result, the data in the data broadcasting can be correctly reproduced.

In this way, even when the special reproducing operations such as the pause operation during the reproducing operation and the fast-forward reproducing operation are carried out, the data in the data broadcasting can be reproduced in synchronism with the video data stream and the audio data stream in the main broadcasting on the time axis.

Also, in the present embodiment, the sort and occurrence time of the events which have occurred in the data in the data broadcasting are recorded on the HDD 14 as the event management table. Therefore, the data broadcasting processing section 18 reproduces the data in the data broadcasting recorded on the HDD 14 in synchronism with the reproduction of the video data stream and the audio data stream in the main broadcasting based upon the data management table and the event management table, after the events having occurred in the data broadcasting are reproduced. As a consequence, even when the special reproducing operations such as the pause operation during the reproducing operation and the fast-forward reproducing operation are carried out, the data in the data broadcasting can be reproduced in synchronism with the video data stream and the audio data stream in the main broadcasting on the time axis.

While the preferred embodiment has been described in its preferred embodiments, it is to be understood that the words which have been used are words of description rather than limitation, and that changes may be made to the invention without departing from its scope as defined by the appended claims.

Each feature disclosed in this specification (which term includes the claims) and/or shown in the drawings may be incorporated in the invention independently of other disclosed and/or illustrated features.

The text of the abstract filed herewith it repeated here as part of the specification.

In digital broadcasting, a stream signal includes a data stream in data broadcasting, and a video data stream and an audio data stream in main broadcasting, which streams are combined. A recording/reproducing apparatus includes: a storage unit; a read/write section configured to access the storage unit; a separating section configured to separate the data stream from the stream signal in a real-time mode and a record mode, and to output a combined data stream of the video data stream and the audio data stream in the read/write section in the record mode; and, a processing section configured to receive the data stream from the separating section in the real-time mode and the record mode, and to output data corresponding to the data stream to the read/write section in the record mode. The read/ write section records the combined data stream in the storage unit, and records the data in the storage unit independently from the combined data stream.

## Claims

1. A recording/reproducing apparatus for a stream signal in digital broadcasting, wherein said stream signal comprises a data stream in data broadcasting, and a video data stream and an audio data stream in main broadcasting, which streams are combined, comprising:
a storage unit (14);
a read/write section (25) configured to access said storage unit;
a separating section (13) configured to separate said data stream from said stream signal in a real-time mode and a record mode, and to output a combined data stream of said video data stream and said audio data stream to said read/write section in the record mode; and,
a processing section (19) configured to receive said data stream from said separating section in the real-time mode and the record mode, and to output a data corresponding to said data stream to said read/write section in the record mode;
wherein said read/write section records said combined data stream in said storage unit and said data in said storage unit independently from said combined data stream.

2. The recording/reproducing apparatus according to claim 1, wherein said data is one of a module data extracted from said data stream and a file data obtained from said module data.

3. The recording/reproducing apparatus according to claim 2, wherein said processing section comprises:
a data acquiring section (17) configured to receive said data stream from said separating section in the real-time mode and the record mode and to extract said module data from said data stream; and,
a file processing section (18) configured to generate said file data from said module data; and,
said data acquiring section outputs one of said module data and said file data as said data to said read/write section in the record mode.

4. The recording/reproducing apparatus according to claim 1, wherein said processing section generates a data management table which contains an identifier to identify said data, and start and end times of the record of said data, and outputs said data management table to said read/write section, which records said data management table in said storage unit.

5. The recording/reproducing apparatus according to claim 4, wherein when an event has occurred in said data, said processing section generates an event management table which contains a sort of said event, an occurrence time of said event, said identifier of said data and an additional data to said data, and outputs said event management table to said read/write section, which records said event management table in said storage unit.

6. The recording/reproducing apparatus according to claim 1, wherein said read/write section reads out said combined data stream and said data from said storage unit in a reproduction mode,
said separating section separates said combined data stream received in the real-time mode or read out from said storage unit in the reproduction mode into said video data steam and said audio data stream,
said processing section generates a video data component and an audio data component from said data received from said separating section in the real-time mode and read out from said storage unit by said read/write section in the reproduction mode,
said recording/reproducing apparatus further comprises:
a video decoder section (15) configured to decode said video data stream from said separating section in the real-time mode and the reproduction mode to generate a decoded video data stream;
an audio decoder section (16) configured to decode said audio data stream from said separating section in the real-time mode and the reproduction mode to generate a decoded audio data stream;
a video synthesizing section (20) configured to synthesize the decoded video data stream and said video data component from said processing section and to output a synthetic video data to an external display unit; and,
an audio synthesizing section (21) configured to synthesize the decoded audio data stream and said audio data component from said processing section and to output a synthetic audio data to an external audio output unit.

7. The recording/reproducing apparatus according to claim 6, wherein said data is one of a module data extracted from said data stream and a file data obtained from said module data, and
said processing section comprises:
a data acquiring section (17) configured to receive said data stream from said separating section in the real time mode and the record mode and from said read/write section in the reproduction mode and to generate said module data from said data stream; and
a file processing section (18) configured to generate said file data from said module data and to generates said video data component and said audio data component from said file data in the real time mode and the reproduction mode.

8. The recording/reproducing apparatus according to claim 6, wherein said processing section generates a data management table which contains an identifier to identify said data, and start and end times of the record of said data, and outputs said data management table to said read/write section, which records said data management table in said storage unit,
said read/write section reads out said combined data stream, said data and said data management table from said storage unit, and
said processing section reproduces said data in synchronization with said video data stream and said audio data stream based on said data management table.

9. The recording/reproducing apparatus according to claim 8, wherein when an event has occurred in said data, said processing section generates an event management table which contains a sort of said event, an occurrence time of said event, said identifier of said data and an additional data to said data, and outputs said event management table to said read/write section, which records said event management table in said storage unit,
said read/write section reads out said combined data stream, said data, said data management table and said event management table from said storage unit, and
said processing section reproduces said data in synchronization with said video data stream and said audio data stream based on said data management table and said event management table.

10. A method of recording/reproducing a stream signal in digital broadcasting, wherein said stream signal comprises a data stream in data broadcasting, and a video data stream and an audio data stream in main broadcasting, which streams are combined, comprising:
receiving said stream signal in a real time mode and a record mode;
separating said stream signal into said data stream and a combined data stream of said video data stream and said audio data stream in the real time mode and the record mode;
recording said combined data stream in a storage unit in the record mode;
generating a data corresponding to said data stream in the real time mode and the record mode;
recording said data in said storage unit independently from said combined data stream;
separating said combined data stream into said vide data stream and said audio data stream in the real-time mode;
decoding said vide data stream and said audio data stream to generate a decoded vide data stream and a decoded audio data stream, respectively in the real-time mode;
generating a video data component and an audio data component from said data in the real time mode; and,
synthesizing said decoded vide data stream and said decoded audio data stream with said video data component and said audio data component to generate a synthetic video data to an external display unit and a synthetic audio data to an external audio output unit, respectively, in the real-time mode.

11. The method according to claim 10, further comprising:
generating a data management table which contains an identifier to identify said data, and start and end times of the record of said data; and,
recording said data management table in said storage unit.

12. The method according to claim 11, further comprising:
when an event has occurred in said data, generating an event management table which contains a sort of said event, an occurrence time of said event, said identifier of said data and an additional data to said data; and,
recording said event management table in said storage unit.

13. The method according to claim 10, further comprising:
reading out said combined data stream and said data from said storage unit in a reproduction mode;
separating said combined data stream into said video data steam and said audio data stream in the reproduction mode;
generating said video data component and said audio data component from the read-out data in the reproduction mode;
decoding said vide data stream and said audio data stream to generate a decoded vide data stream and a decoded audio data stream, respectively in the reproduction mode;
generating a video data component and an audio data component from said data in the reproduction mode; and
synthesizing said decoded vide data stream and said decoded audio data stream with said video data component and said audio data component to generate a synthetic video data to an external display unit and a synthetic audio data to an external audio output unit, respectively, in the reproduction mode.

14. The method according to claim 11, further comprising:
reading out said data management table from said storage unit in the reproduction mode; and,
reproducing said data in synchronization with said video data stream and said audio data stream based on said data management table.

15. The method according to claim 12, further comprising:
reading out said event management table from said storage unit in the reproduction mode; and,
reproducing said data in synchronization with said video data stream and said audio data stream based on said data management table and said event management table.

16. The method according to any of claims 10 to 15, wherein said generating a data corresponding to said data stream comprises:
generating as said data, a module data from said data stream.

17. The method according to any of claims 10 to 15, wherein said generating a data corresponding to said data stream comprises:
generating a module data from said data stream; and,
generating as said data, a file data from said module data.
